# EUROPEAN PATENT SPECIFICATION

(11) **EP 4 422 933 B1**
(45) Date of publication and mention of the grant of the patent: **09.09.2026**
(21) Application number: 22793768.7
(22) Date of filing: 24.10.2022
(51) Int. Cl.: B60S 1/34, B60S 1/52

(54) **WIPER ARM FOR WIPER OF VEHICLE, WIPER AND VEHICLE**
WISCHERARM FÜR EINEN SCHEIBENWISCHER EINES FAHRZEUGS, SCHEIBENWISCHER UND FAHRZEUG
BRAS D'ESSUIE-GLACE POUR ESSUIE-GLACE DE VÉHICULE, ESSUIE-GLACE ET VÉHICULE

(30) Priority: 28.10.2021 CN 202122604158 U
(43) Date of publication of application: 04.09.2024
(73) Proprietor: Valeo Systèmes d'Essuyage, 78322 Le Mesnil Saint Denis (FR)
(72) Inventor: HONG, Haoyi, Shanghai 200233 (CN); PU, Jinlong, Shanghai 200233 (CN); CHENG, Xu, Shanghai 200233 (CN)
(74) Representative: Valeo Visibility
(86) International application number: PCT/EP2022/079648
(87) International publication number: WO 2023/072862

(56) References cited:
- EP-A1- 3 798 067
- WO-A1-2021/020123
- DE-A1- 10 122 458

## Description

### Technical field

The present invention relates to a wiper arm for a wiper of a vehicle, a wiper comprising the wiper arm, and a vehicle comprising the wiper.

### Background art

Wipers are an essential component of vehicles, their main purpose being to wipe away rain water, snow water or dust, etc. falling on the glass of a vehicle window in bad weather (e.g. when it is raining or snowing, or during a sandstorm), so that the driver's field of vision is not obstructed, to ensure safety of travel. In general, a wiper comprises a wiper arm base connected to a drive mechanism, a wiper arm connected to the wiper arm base and used to hold a wiper blade, and a nozzle for spraying a cleaning fluid towards the windscreen, wherein the wiper arm may comprise an arm body, a cover connected to the arm body to form a cavity, and a duct arranged in the cavity and used to deliver cleaning fluid, etc., and wherein the nozzle is mounted on a nozzle frame, the nozzle frame generally being arranged on the arm body.

In a snowstorm, snow is likely to accumulate on the windscreen of a vehicle parked outdoors, and snow that has built up over a long period of time is quite difficult to clear, with the vehicle user needing to use a snow shovelling device to shovel it away. In the process of shovelling the snow, the snow shovelling apparatus will inevitably collide with the wipers. Because gaps allowing insertion are present at the connection between the cover and the arm body and also between the nozzle frame and the arm body, such collisions might result in separation of the cover from the arm body of the wiper arm, and might even result in damage to the nozzle frame. In these circumstances, components within the cavity of the wiper arm will be exposed; this will affect the appearance of the wiper, and may even prevent the wiper from being used normally.

### Summary of the invention

Therefore, the objective of the present invention is to provide a wiper arm for a wiper of a vehicle, a wiper comprising the wiper arm, and a vehicle comprising the wiper. When subjected to an external force, e.g. an external force applied when shovelling snow, a cover of the wiper arm will not separate from an arm body, a nozzle frame of the wiper arm will not be damaged, and a cavity formed by the cover and the arm body will not be exposed, so the wiper arm will not be damaged and will have an intact appearance. In addition, the wiper arm has a simple structure and a low manufacturing cost.

The above objective is achieved by means of the wiper arm, wiper and vehicle described below.

The present invention relates to a wiper arm for a wiper of a vehicle. The wiper arm comprises: an elongated arm body, having a first sidewall, a second sidewall, and a base connecting the first sidewall and the second sidewall; and a cover, having a first side edge and a second side edge, the first side edge being engaged with the first sidewall, and the second side edge being engaged with the second sidewall, to form a cavity between the arm body and the cover, wherein a first engagement feature part is provided on at least one of the first side edge and the second side edge, and a second engagement feature part cooperating with the first engagement feature part is provided on at least one of the first sidewall and the second sidewall.

In an embodiment, open ends of the first sidewall and the second sidewall define a width of the arm body, while the first side edge and the second side edge define a width of the cover, the width of the arm body being greater than or equal to the width of the cover.

In an embodiment, the first engagement feature part comprises multiple protrusions which are respectively arranged on the first side edge and the second side edge and protrude towards the interior of the cavity, and the second engagement feature part is inner surfaces of the first sidewall and the second sidewall.

In an embodiment, the protrusions are spaced apart along the length of the cover.

According to the invention, the first engagement feature part comprises a snap-fit arranged on the first side edge and a lap part arranged on the second side edge; and the second engagement feature part is a first lug arranged on the first sidewall and cooperating with the snap-fit, and a second lug arranged on the second sidewall and cooperating with the lap part.

In an unclaimed embodiment, the first engagement feature part comprises a first snap-fit arranged on the first side edge and a second snap-fit arranged on the second side edge; and the second engagement feature part is a first lug arranged on the first sidewall and cooperating with the first snap-fit, and a second lug arranged on the second sidewall and cooperating with the second snap-fit.

In an unclaimed embodiment, at least one of the snap-fit, the first snap-fit and the second snap-fit is at least partially located in the cavity and abuts an inner surface of the corresponding second engagement feature part.

In an unclaimed embodiment, at least one of the snap-fit, the first snap-fit and the second snap-fit is an inverted U-shaped clip or a snap hook.

In an embodiment, the wiper arm further comprises a nozzle frame, a U-shaped slot is provided on the nozzle frame, a part of the first sidewall is inserted into the U-shaped slot, and a sidewall of the U-shaped slot that is located outside the arm body does not project beyond an outermost contour of the first sidewall.

In an embodiment, a recess is provided on the first sidewall, and an end of the sidewall of the U-shaped slot that is located outside the arm body is located in the recess.

In an embodiment, the part of the first sidewall is provided with an opening, and a projection is provided on a sidewall of the U-shaped slot that is located in the interior of the arm body, the projection being engaged with the opening.

The present invention further relates to a wiper for a vehicle, the wiper comprising the wiper arm as described above.

The present invention further relates to a vehicle, comprising the wiper as described above.

### Brief description of the figures

A better understanding of the advantages and objectives of the present invention can be gained from preferred embodiments of the present invention as described in detail below in conjunction with the drawings. In order to better illustrate the relationships among the components in the drawings, the drawings are not drawn to scale. Among the drawings,
Fig. 1 shows a schematic drawing of a wiper according to an embodiment of the present invention.
Figs. 2a and 2b show schematic drawings of a B-B section of part of a wiper arm of the wiper according to an unclaimed embodiment of the present invention.
Fig. 3 shows a schematic drawing of an A-A section of part of the wiper arm of the wiper according to the present invention.
Fig. 4 shows another unclaimed schematic drawing of an A-A section of part of the wiper arm of the wiper according to an embodiment of the present invention.
Fig. 5 shows another schematic drawing of an A-A section of part of the wiper arm of the wiper according to an unclaimed embodiment of the present invention.
Fig. 6 shows a schematic drawing of a nozzle frame of the wiper arm of the wiper according to an embodiment of the present invention.
Fig. 7 shows a top perspective view of the nozzle frame of the wiper arm of the wiper according to an embodiment of the present invention.
Fig. 8 shows a schematic drawing of a C-C section of part of the nozzle frame according to Fig. 7; and
Fig. 9 shows a schematic drawing of a D-D section of part of the nozzle frame according to Fig. 8.

### Detailed description of embodiments

In order to clarify the objective, technical solution and advantages of the present invention, the technical solution of embodiments of the present invention is described clearly and completely below with reference to the drawings of specific embodiments of the present invention. In the drawings, identical reference numerals denote identical components. It should be noted that the described embodiments are some, not all, embodiments of the present invention. All other embodiments obtained by those of ordinary skill in the art based on the described embodiments of the present invention without inventive effort shall fall within the scope of protection of the present invention.

Unless defined otherwise, the technical or scientific terms used herein shall have the common meanings as understood by those of ordinary skill in the art to which the present invention belongs. The words "first", "second" and the like used in the description and claims of the present invention patent application do not denote any order, quantity or importance, and are only used to distinguish different constituent parts. Likewise, words such as "a" or "one" do not necessarily represent a quantity limit. Words such as "comprising", "including" or "having" mean that the element or object preceding the word covers the elements or objects and equivalents thereof listed after the word, without excluding other elements or objects. Words such as "connection" or "communication", rather than being limited to the physical or mechanical connection or communication shown in a drawing, may include connection or communication equivalent thereto, irrespective of whether it is direct or indirect. "Upper", "lower", "left", "right", etc. are only used to indicate a relative positional relationship, and when the absolute position of the described object changes, the relative positional relationship might also change accordingly.

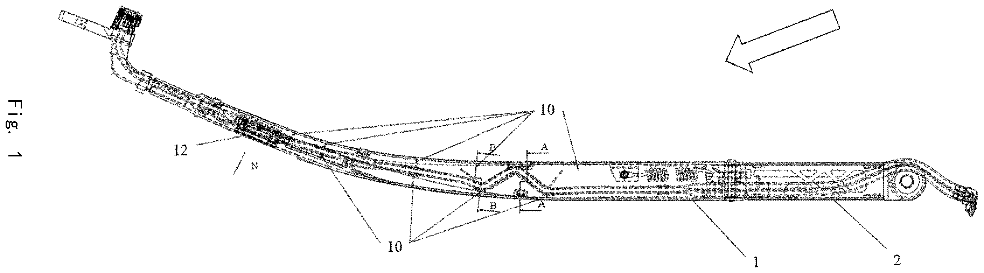

Various embodiments of the present invention are described in detail below with reference to Figs. 1 - 9.

Fig. 1 shows a schematic perspective view of roughly the whole of a wiper according to an embodiment of the present invention; the wiper is stowed on the windscreen of a vehicle (e.g. a motor vehicle, an electric vehicle or a hybrid vehicle, etc.), and the schematic drawing in Fig. 1 is a perspective view of the wiper as viewed when facing towards the windscreen. The wiper comprises a wiper arm 1 for holding a wiper blade, and a wiper arm base 2 connected to a drive mechanism. The wiper arm 1 is connected to the wiper arm base 2, and under the driving action of the drive mechanism, the wiper arm 1 can move back and forth between a return wiper position (i.e. a maximum wiping position) and an inner wiping position (i.e. the stowed position shown in Fig. 1). The wiper arm 1 may comprise an arm body made of metal, a cover made of plastic and covering the arm body to form a cavity, and a nozzle frame 12. When there is accumulated snow or ice on the windscreen, the vehicle user needs to use a snow shovelling device to shovel the snow away. For example, the user applies a force substantially in the direction indicated by the unshaded arrow in Fig. 1 to shovel away snow or ice that has built up on the windscreen.

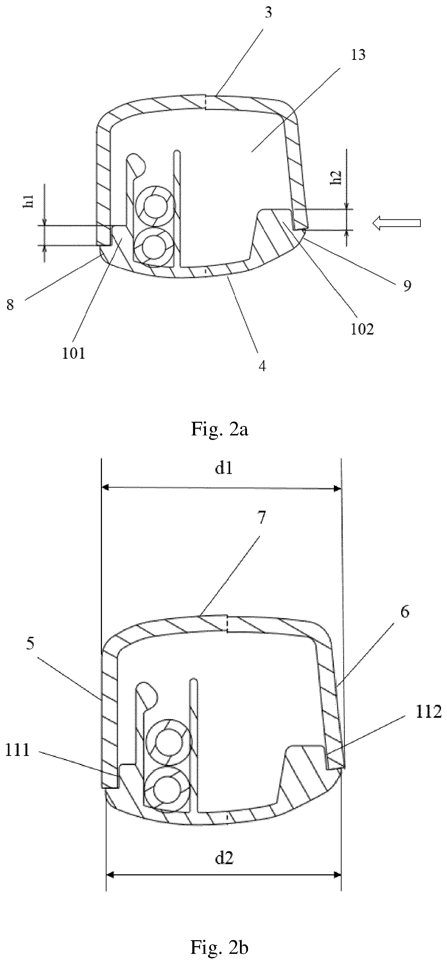

Referring to Figs. 2a and 2b, which are sectional drawings along the plane B-B in Fig. 1, the wiper arm 1 comprises an elongated arm body 3 and a cover 4. The arm body 3 has a first sidewall 5, a second sidewall 6, and a base 7 connecting the first sidewall 5 and the second sidewall 6. The cover 4 has a first side edge 8 and a second side edge 9. The first side edge 8 is engaged with the first sidewall 5, and the second side edge 9 is engaged with the second sidewall 6, to form a cavity 13 between the arm body 3 and the cover 4.

Again referring to Fig. 1, a first engagement feature part 10 is provided on at least one of the first side edge 8 and second side edge 9, and a second engagement feature part cooperating with the first engagement feature part 10 is provided on at least one of the first sidewall 5 and second sidewall 6 (not shown in Fig. 1).

For example, referring to Figs. 2a and 2b, the first engagement feature part 10 comprises multiple protrusions 101, 102 which are respectively arranged on the first side edge 8 and second side edge 9 and protrude towards the interior of the cavity 13, i.e. multiple first protrusions 101 arranged on the first side edge 8 and multiple second protrusions 102 arranged on the second side edge 9; and the second engagement feature part is inner surfaces 111, 112 of the first sidewall 5 and second sidewall 6 of the arm body 3, i.e. inner surfaces facing towards the cavity 13. The first protrusions 101 abut the inner surface 111 of the first sidewall 5, and the second protrusions 102 abut the inner surface 112 of the second sidewall 6. Furthermore, as shown in Fig. 1, the protrusions are spaced apart along the length of the cover 3. For example, the multiple first protrusions 101 are spaced apart on the first side edge 8 along the length of the cover 3, at intervals of about 10 cm for example, in particular uniformly; and the multiple second protrusions 102 are spaced apart on the second side edge 9 along the length of the cover 3, at intervals of about 10 cm for example, in particular uniformly. Thus, the cover 4 will not move in the horizontal direction shown in Figs. 2a and 2b (i.e. move left and right), and in particular will not detach from the arm body 3 when subjected to an external force in the direction indicated by the unshaded arrow in Fig. 2a for example. The unshaded arrow in Fig. 2a indicates schematically the force that might be applied to the wiper when the user is shovelling snow, but the force that is actually applied might deviate from the direction indicated by the arrow. In other words, the unshaded arrow in Fig. 2a indicates schematically a component of the force that might be applied to the wiper when the user is shovelling snow, said component lying in the rightward horizontal direction in the figure. For example, the force that might be applied to the wiper when the user is shovelling snow or ice may also lie substantially in the opposite direction to that indicated by the unshaded arrow in Fig. 2a.

Furthermore, as shown in Fig. 2b, open ends of the first sidewall 5 and second sidewall 6 of the arm body 3 define a width d1 of the arm body 3, while the first side edge 8 and second side edge 9 of the cover 4 define a width d2 of the cover 4, the width d1 of the arm body being greater than or equal to the width d2 of the cover 4. For example, an outer contour of the first sidewall 5 of the arm body 3 is about 0.5 mm further out than an outer contour of the first side edge 8 of the cover 4, and an outer contour of the second sidewall 6 of the arm body 3 is about 0.5 mm further out than an outer contour of the second side edge 9 of the cover 4. Thus, when the user is shovelling snow, the snow shovelling device will not touch the cover 4, and will only possibly touch the arm body 3, so will not cause the cover 4 to detach from the arm body 3.

In addition, again referring to Fig. 2a, the first protrusions 101 are of height h1, e.g. about 3mm; and the second protrusions 102 are of height h2, e.g about 3.1 mm. As used herein, the term "height" refers to the dimension in the direction perpendicular to the base 7 of the arm body 3, i.e. the dimension in the upward vertical direction in Fig. 2a. The present invention does not impose limitations on the height of the protrusions, as long as they satisfy a particular application.

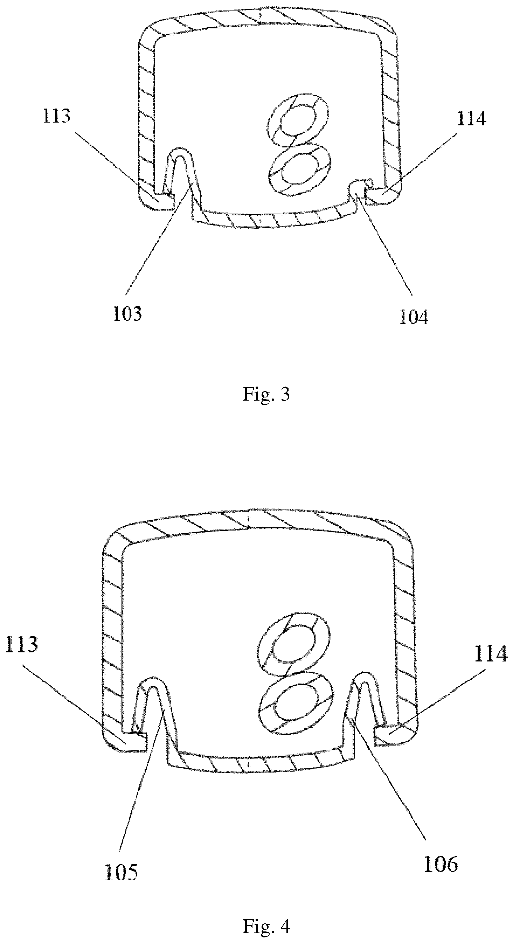

As shown in Fig. 3, the first engagement feature part 10 comprises a snap-fit 103 arranged on the first side edge 8 of the cover 4, and a lap part 104 arranged on the second edge 9 of the cover 4. In this case, the second engagement feature part on the arm body 3 is a first lug 113 arranged on the first sidewall 5 and cooperating with the snap-fit 103, and a second lug 114 arranged on the second sidewall 6 and cooperating with the lap part 104. The snap-fit 103 is at least partially, for example completely located in the cavity 13 and abuts an inner surface of the first lug 113, i.e. a surface facing towards the interior of the cavity.

As an unclaimed alternative or addition to Fig. 3, as shown in Fig. 4, the first engagement feature part 10 may comprise a first snap-fit 105 arranged on the first side edge 8 of the cover 4, and a second snap-fit 106 arranged on the second edge 9 of the cover 4. In this case, the second engagement feature part on the arm body 3 is a first lug 113 arranged on the first sidewall 5 and cooperating with the first snap-fit 105, and a second lug 114 arranged on the second sidewall 6 and cooperating with the second snap-fit 106. The first snap-fit 105 is at least partially, for example completely located in the cavity 13 and abuts an inner surface of the first lug 113, i.e. a surface facing towards the interior of the cavity. The second snap-fit 106 is at least partially, for example completely located in the cavity 13 and abuts an inner surface of the second lug 114, i.e. a surface facing towards the interior of the cavity.

For example, the first lug 113 is a protrusion extending from the end of the first sidewall 5 towards the interior of the cavity 13, e.g. extending perpendicular to the first sidewall 5. For example, the second lug 114 is a protrusion extending from the end of the second sidewall 6 towards the interior of the cavity 13, e.g. extending perpendicular to the second sidewall 6.

For example, the snap-fit 103, the first snap-fit 105 and the second snap-fit 106 may be inverted U-shaped clips, as shown in Figs. 3 and 4, with their openings facing out of the cavity. The inverted U-shaped clip is inserted into the cavity 13 by having it deform, and an end of one arm of the inverted U-shaped clip abuts the inner surface of the corresponding lug; thus, the corresponding lug can block movement of the cover 4 away from the cavity, i.e. movement in the downward vertical direction in Figs. 3 and 4. In this way, it is not only possible to connect the cover 4 securely to the arm body 3, but also possible to reduce the risk of detaching the cover 4 from the arm body 3 when an external force is applied perpendicular to the base 7 of the arm body 3 (i.e. in the downward vertical direction in Figs. 3 and 4).

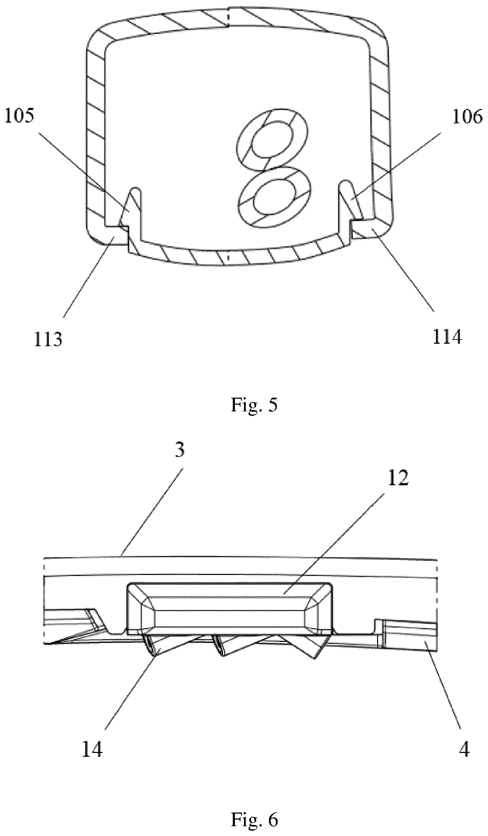

As shown in Fig. 5, in other examples, the first snap-fit 105 and second snap-fit 106 may be snap hooks. The snap hook is a hook with an inclined face, and can deform so as to be inserted into the cavity 13, and hooked by the corresponding lug. In this way, the risk of detaching the cover 4 from the arm body 3 when an external force is applied perpendicular to the base 7 of the arm body 3 (i.e. in the downward vertical direction in Fig. 5) can be reduced to a greater extent.

In addition, in Figs. 3 - 5, the width d2 of the cover 4 is less than the width d1 of the arm body 3, so when the user is shovelling snow, the snow shovelling device will not touch the cover 4, thus avoiding the risk of the cover 4 detaching from the arm body 3.

For example, the first engagement feature part may be integrally formed with the cover by injection moulding.

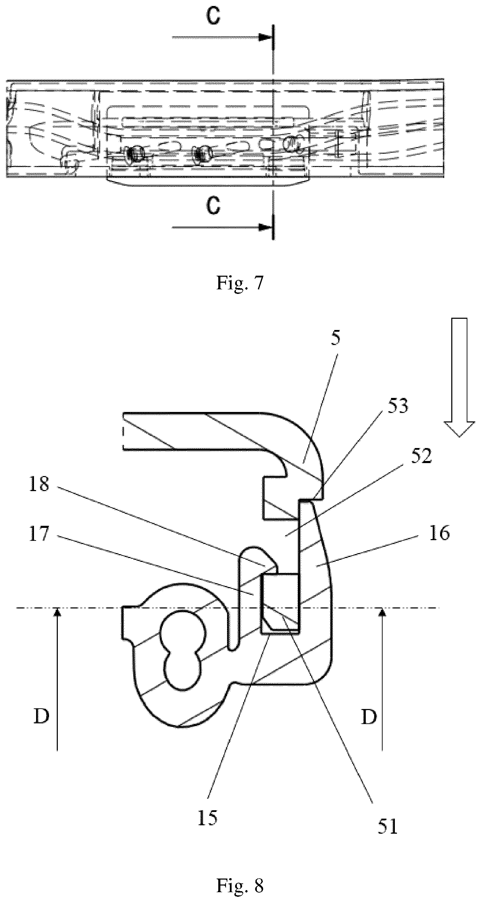

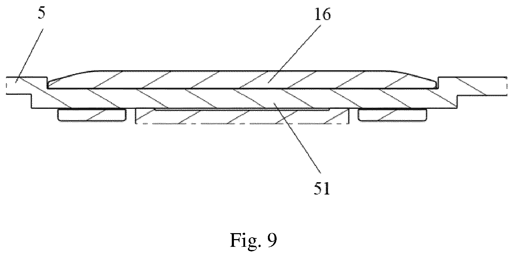

Fig. 6 shows a schematic drawing of the nozzle frame 12 of the wiper arm of the wiper in Fig. 1, as viewed in direction N. The nozzle frame 12 is arranged on the arm body 3, and used to hold a wiper nozzle 14 of a duct arranged in the cavity, to spray fluid towards the windscreen. Fig. 7 shows a top perspective view of the nozzle frame in Fig. 6, i.e. a perspective view of the nozzle frame as viewed when facing towards the windscreen. Fig. 8 shows a sectional drawing along the plane C-C in Fig. 7. Fig. 9 shows a sectional drawing along the plane D-D in Fig. 8. As shown in Figs. 8 and 9, a U-shaped slot 15 is provided on the nozzle frame 12; a part 51 of the first sidewall 5 of the arm body 3 is inserted into the U-shaped slot 15, and a sidewall 16 of the U-shaped slot 15 that is located outside the arm body 3 does not project beyond an outermost contour of the first sidewall 5 of the arm body 3. For example, as shown in Figs. 8 and 9, a recess 53 is provided on the first sidewall 5 of the arm body 3, and an end of the sidewall 16 of the U-shaped slot 15 that is located outside the arm body 3 is located in the recess 53. For example, the recess 53 is sunk towards the interior of the cavity from an outer surface of the first sidewall, e.g. sunk by about 0.5 - 1 mm in the leftward horizontal direction in Fig. 8.

To allow the nozzle frame 12 to be mounted on the arm body 3, the width of the U-shaped slot 15 (i.e. the dimension thereof in the horizontal direction in Fig. 8) is matched to the width of the part 51 of the first sidewall 5 of the arm body 3 that is inserted into the U-shaped slot 15, and the part 51 of the first sidewall 5 of the arm body 3 is provided with an opening 52; a projection 18 is provided on a sidewall 17 of the U-shaped slot 15 that is located in the interior of the arm body 3, the projection 18 being engaged with the opening 52. For example, the projection 18 is a snap hook. For example, the projection 18 is disposed at an end of the sidewall 17 of the U-shaped slot 15 that is located in the interior of the arm body 3.

Again referring to Fig. 9, the length of the part 51 of the first sidewall 5 that is inserted into the U-shaped slot 15 substantially corresponds to the length of the nozzle frame. These lengths are dimensions in the horizontal direction in Fig. 9.

Because the sidewall 16 of the U-shaped slot 15 that is located outside the arm body 3 does not project beyond the outermost contour of the first sidewall 5 of the arm body 3, when the vehicle user uses a snow shovelling device to apply a force to the wiper in the direction indicated by the unshaded arrow in Fig. 8, the snow shovelling device will not touch the nozzle frame 12, much less enter a small gap between the first sidewall 5 of the arm body 3 and the sidewall 16 of the U-shaped slot 15 that is located outside the arm body 3, and therefore will not cause damage to the nozzle frame; and exposure of the cavity 13 through the opening 52 is also avoided.

The nozzle frame 12 described above is a separate component from the cover 4, but in other examples, the nozzle frame 12 described above may be formed as a single component together with the cover 4.

Under the action of an external force, e.g. an external force applied when shovelling snow, the wiper arm of the present invention will not be damaged and will have an intact appearance. In addition, the wiper arm of the present invention has a simple structure and a low manufacturing cost.

## Claims

1. Wiper arm for a wiper of a vehicle, wherein the wiper arm (1) comprises:
an elongated arm body (3), having a first sidewall (5), a second sidewall (6), and a base (7) connecting the first sidewall (5) and the second sidewall (6); and
a cover (4), having a first side edge (8) and a second side edge (9), the first side edge (8) being engaged with the first sidewall (5), and the second side edge (9) being engaged with the second sidewall (6), to form a cavity (13) between the arm body (3) and the cover (4),
wherein a first engagement feature part (10) is provided on at least one of the first side edge (8) and the second side edge (9), and a second engagement feature part cooperating with the first engagement feature part (10) is provided on at least one of the first sidewall (5) and the second sidewall (6); open ends of the first sidewall (5) and the second sidewall (6) define a width (d1) of the arm body (3), while the first side edge (8) and the second side edge (9) define a width (d2) of the cover (4), the width (d1) of the arm body (3) being greater than or equal to the width (d2) of the cover (4), **characterized in that**
the first engagement feature part (10) comprises a snap-fit (103) arranged on the first side edge (8) and a lap part (104) arranged on the second side edge (9); and the second engagement feature part is a first lug (113) arranged on the first sidewall and cooperating with the snap-fit, and a second lug (114) arranged on the second sidewall and cooperating with the lap part.

2. Wiper arm according to Claim 1, **characterized in that** the snap-fit (103) is at least partially located in the cavity (13) and abuts an inner surface of the corresponding second engagement feature part.

3. Wiper arm according to Claim 1, **characterized in that** the snap-fit is an inverted U-shaped clip or a snap hook.

4. Wiper for a vehicle, **characterized in that** the wiper comprises the wiper arm according to any one of Claims 1 - 3.

5. Vehicle, **characterized by** comprising the wiper according to Claim 4.

## Patentansprüche

1. Wischerarm für einen Wischer eines Fahrzeugs, wobei der Wischerarm (1) umfasst:
einen länglichen Armkörper (3) mit einer ersten Seitenwand (5), einer zweiten Seitenwand (6) und einer Basis (7), die die erste Seitenwand (5) und die zweite Seitenwand (6) verbindet; und
eine Abdeckung (4) mit einer ersten Seitenkante (8) und einer zweiten Seitenkante (9), wobei die erste Seitenkante (8) mit der ersten Seitenwand (5) in Eingriff steht und die zweite Seitenkante (9) mit der zweiten Seitenwand (6) in Eingriff steht, um einen Hohlraum (13) zwischen dem Armkörper (3) und der Abdeckung (4) zu bilden,
wobei ein erstes Eingriffsmerkmalsteil (10) an mindestens einer der ersten Seitenkante (8) und der zweiten Seitenkante (9) vorgesehen ist, und ein zweites Eingriffsmerkmalsteil, das mit dem ersten Eingriffsmerkmalsteil (10) zusammenwirkt, an mindestens einer der ersten Seitenwand (5) und der zweiten Seitenwand (6) vorgesehen ist; offene Enden der ersten Seitenwand (5) und der zweiten Seitenwand (6) definieren eine Breite (d1) des Armkörpers (3), während die erste Seitenkante (8) und die zweite Seitenkante (9) eine Breite (d2) der Abdeckung (4) definieren, wobei die Breite (d1) des Armkörpers (3) größer als oder gleich der Breite (d2) der Abdeckung (4) ist, **dadurch gekennzeichnet, dass**
das erste Eingriffsmerkmalsteil (10) eine Schnappverbindung (103), die an der ersten Seitenkante (8) angeordnet ist, und ein Überlappungsteil (104), das an der zweiten Seitenkante (9) angeordnet ist, umfasst; und das zweite Eingriffsmerkmalsteil ein erstes Anschlagteil (113), das an der ersten Seitenwand angeordnet ist und mit der Schnappverbindung zusammenwirkt, und ein zweites Anschlagteil (114), das an der zweiten Seitenwand angeordnet ist und mit dem Überlappungsteil zusammenwirkt, ist.

2. Wischerarm nach Anspruch 1, **dadurch gekennzeichnet, dass** die Schnappverbindung (103) zumindest teilweise im Hohlraum (13) angeordnet ist und an einer Innenfläche des entsprechenden zweiten Eingriffsmerkmalsteils anliegt.

3. Wischerarm nach Anspruch 1, **dadurch gekennzeichnet, dass** die Schnappverbindung eine umgekehrt U-förmige Klammer oder ein Schnapphaken ist.

4. Wischer für ein Fahrzeug, **dadurch gekennzeichnet, dass** der Wischer den Wischerarm nach einem der Ansprüche 1 - 3 umfasst.

5. Fahrzeug, **gekennzeichnet durch** den Wischer nach Anspruch 4.

## Revendications

1. Bras d'essuie-glace pour un essuie-glace d'un véhicule, dans lequel le bras d'essuie-glace (1) comprend :
un corps de bras allongé (3), ayant une première paroi latérale (5), une deuxième paroi latérale (6), et une base (7) reliant la première paroi latérale (5) et la deuxième paroi latérale (6) ; et
un couvercle (4), ayant un premier bord latéral (8) et un deuxième bord latéral (9), le premier bord latéral (8) étant en prise avec la première paroi latérale (5), et le deuxième bord latéral (9) étant en prise avec la deuxième paroi latérale (6), pour former une cavité (13) entre le corps de bras (3) et le couvercle (4),
dans lequel une première partie d'élément d'engagement (10) est prévue sur au moins l'un du premier bord latéral (8) et du deuxième bord latéral (9), et une deuxième partie d'élément d'engagement coopérant avec la première partie d'élément d'engagement (10) est prévue sur au moins l'une de la première paroi latérale (5) et de la deuxième paroi latérale (6) ; des extrémités ouvertes de la première paroi latérale (5) et de la deuxième paroi latérale (6) définissent une largeur (d1) du corps de bras (3), tandis que le premier bord latéral (8) et le deuxième bord latéral (9) définissent une largeur (d2) du couvercle (4), la largeur (d1) du corps de bras (3) étant supérieure ou égale à la largeur (d2) du couvercle (4), **caractérisé en ce que** la première partie d'élément d'engagement (10) comprend un encliquetage (103) disposé sur le premier bord latéral (8) et une partie de recouvrement (104) disposée sur le deuxième bord latéral (9) ; et la deuxième partie d'élément d'engagement est une première patte (113) disposée sur la première paroi latérale et coopérant avec l'encliquetage, et une deuxième patte (114) disposée sur la deuxième paroi latérale et coopérant avec la partie de recouvrement.

2. Bras d'essuie-glace selon la revendication 1, **caractérisé en ce que** l'encliquetage (103) est au moins partiellement situé dans la cavité (13) et est en appui contre une surface intérieure de la deuxième partie d'élément d'engagement correspondante.

3. Bras d'essuie-glace selon la revendication 1, **caractérisé en ce que** l'encliquetage est un clip en forme de U inversé ou un crochet d'encliquetage.

4. Essuie-glace pour un véhicule, **caractérisé en ce que** l'essuie-glace comprend le bras d'essuie-glace selon l'une quelconque des revendications 1 à 3.

5. Véhicule, **caractérisé en ce qu'**il comprend l'essuie-glace selon la revendication 4.
